# EUROPÄISCHE PATENTSCHRIFT

(11) **EP 2 959 176 B1**
(45) Veröffentlichungstag und Bekanntmachung des Hinweises auf die Patenterteilung: **21.08.2019**
(21) Anmeldenummer: 14705363.1
(22) Anmeldetag: 20.02.2014
(51) Int. Cl.: F16C 19/46, F16C 43/06, F16C 33/46, F16C 35/067

(54) **WÄLZLAGERKÄFIG MIT RASTMITTELN UND NADELLAGER MIT EINEM AN EINEM KÄFIG EINGERASTETEN AUSSENRING**
ROLLING BEARING CAGE WITH DETENTS AND NEEDLE BEARING WITH AN OUTER RING SNAP-FITTED TO A CAGE
CAGE DE ROULEMENT AVEC MOYENS D'ENCLENCHEMENT ET ROULEMENT À AGUILLES AVEC UNE BAGUE EXTÉRIEURE ENCLENCHÉE SUR UN CAGE

(30) Priorität: 20.02.2013 DE 102013202726
(43) Veröffentlichungstag der Anmeldung: 30.12.2015
(73) Patentinhaber: Aktiebolaget SKF, 415 50 Göteborg (SE)
(72) Erfinder: STEBLAU, Dieter, 97422 Schweinfurt (DE)
(74) Vertreter: Kuhstrebe, Jochen
(86) Internationale Anmeldenummer: PCT/EP2014/053326
(87) Internationale Veröffentlichungsnummer: WO 2014/128215

(56) Entgegenhaltungen:
- WO-A1-2012/014069
- WO-A1-2013/087062
- DE-A1-102005 018 244
- DE-A1-102006 057 695
- DE-A1-102007 013 039
- DE-A1-102009 016 162
- DE-U- 1 862 600
- JP-A- 2011 169 392
- JP-U- H0 413 820
- US-A1- 2010 129 023

## Beschreibung

Die vorliegende Erfindung liegt auf dem Gebiet der Wälzlager, insbesondere der Käfigkomponenten für Wälzlager.

Aus dem Bereich der konventionellen Technik sind bereits viele Formen von Wälzlagern bekannt. Darunter befinden sich beispielsweise Kugellager, Rollenlager, Kegelrollenlager, Nadellager, usw. Ein typisches Anwendungsbeispiel für Nadellager ist die Lagerung von langen Wellen, wie sie beispielsweise in Getrieben vorkommen kann. Übliche Massivnadellager bestehen aus einem Außenring und einem Innenring, sowie einem Lagerkäfig, und Wälzkörpern, den Nadelrollen. In Anwendungen bei denen die Wellen gehärtet und geschliffen werden können, stellen Nadellager ohne Innenring eine bessere Lösung dar, hier kann die Welle stärker und somit auch steifer ausgeführt werden. In den Fällen bei denen eine getrennte Montage von Außenring und Nadelkranz erforderlich ist, werden Lager ohne Borde am Außenring eingesetzt, um die Montage zu erleichtern. Bei Nadellagern ohne Borde muss der Nadelkranz seitlich durch die Anlaufflächen der Welle bzw. des Gehäuses axial geführt werden. In Anwendungen bei denen die lange, glatte Welle bzw. das Gehäuse ohne Möglichkeit der axialen Nadelkranzführung gegeben sind, werden unterschiedliche Designvarianten zur Nadelkranzführung am bordlosen Außenring vorgenommen.

Insbesondere bei der Lagerung langer Wellen kommen demnach glatte Lagerringe zum Einsatz, d.h. Lagerringe die keinen axialen Begrenzungsbord aufweisen, da diese erst mit dem Einsatz der Welle montiert werden. Eine axiale Begrenzung oder Fixierung von Lagerring und Käfig durch entsprechende Borde entfällt.

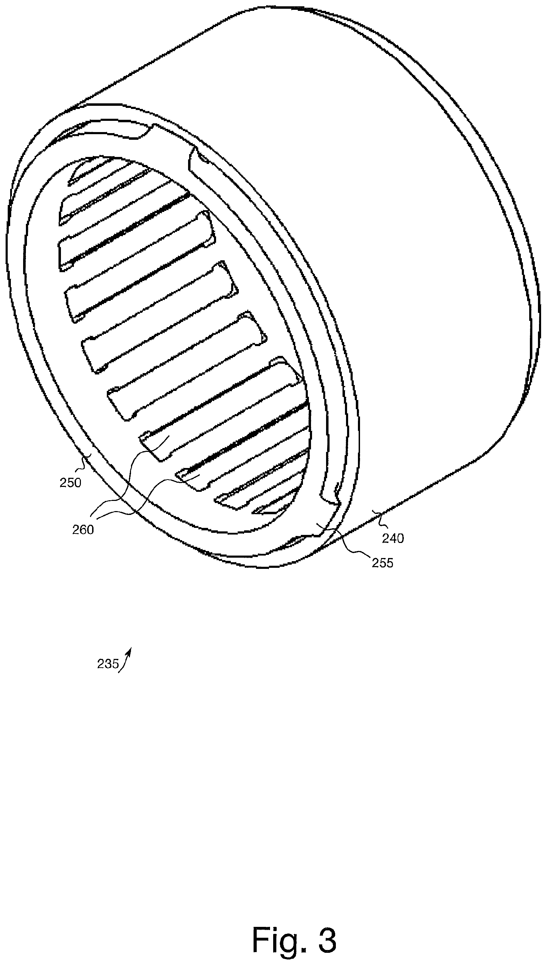

Die Figur 3 zeigt eine Darstellung eines Nadellagers 235. Das Nadellager 235 umfasst einen Lageraußenring 240, einen Lagerkäfig 250 mit Nasen 255 und Wälzkörper 260. Die Wälzkörper 260 sind im vorliegenden Beispiel als Nadeln, d.h. zylinderförmig ausgebildet. Der Nadelkranz, der aus den Nadeln 260 und dem Käfig 250 gebildet ist, wird dann von einem Lageraußenring 240 radial geführt. Bei der Montage wird der Außenring 240 axial über den Käfig 250 und den Nadelkranz 250, 260 geführt und im Anschluss in einer Gehäusebohrung fixiert. Der Lagerkäfig 250 weist dabei Nasen 255 auf, durch die der Außenring 240 während des Transportes gesichert werden kann. Nachteil dieser Nasen 255 ist eine erschwerte Montage, da der Lageraußenring 240 über die Nasen 255 geschoben werden muss, und es dadurch zu Verklemmungen und Verformungen des Käfigs 250 kommen kann. Ein weiteres damit einhergehendes Problem liegt darin, dass die Nasen 255 aufgrund der bei der Montage entstehenden Verklemmungen eine gewisse Höhe nicht überschreiten dürfen. Im Betrieb, insbesondere dann wenn es zu Axialschüben oder axialen Krafteinwirkungen kommt, vermögen die Nasen 255 den Lageraußenring 240 bzw. umgekehrt in axialer Richtung nicht zu fixieren, so dass diese sich gegeneinander verschieben können und die Nasen 255 dann verschleißen oder brechen können. In anderen Worten, kann es bei einer axialen Verschiebung des Nadelkranzes 250, 260 gegenüber dem Lagerring 240 zu einer Verkleinerung der Kontaktflächen zwischen den Wälzkörpern 260 und dem Lagerring 240 kommen, d.h. die Wälzfläche nimmt ab. Die vorhandene Last muss dann von einer kleineren Fläche, sowohl bei den Wälzkörpern als auch im Lagerring, getragen werden und es kann zu einem unzulässigen Verschleiß, Materialermüdung und zum vorzeitigen Lagerausfall kommen

Die Figur 3 verdeutlicht die Problematik der Nasen 255, die nicht zu weit über den Rand des Lageraußenringes 240 überstehen dürfen, da es sonst bei der Montage zur Verklemmungen und zu Brüchen des Lagerkäfigs 250 kommen kann. Die Nasen 255 werden daher zur Transportsicherung ausgebildet, d.h. um den Lageraußenring 240 und den Lagerkäfig 250 gegenüber geringen Krafteinwirkungen, die erheblich unter den Belastungen im eigentlichen Betrieb des Nadellagers 235 liegen, zu sichern und so Transportschäden, die durch axiale Verschiebungen des Lagerkäfigs und damit der Wälzkörper gegenüber dem Lageraußenring 240 entstehen können, zu vermeiden. Im Betrieb wird der Lageraußenring 240 oder der Lagerkäfig 250 dann beispielsweise gegenüber einem Gehäuse oder gegenüber einer Welle fixiert. Treten nun axiale Krafteinwirkungen auf die Wälzkörper auf, wie z.B. durch axiale Verschiebungen einer gelagerten Welle, so vermögen die Nasen 255 nicht diesen Kräften standzuhalten, so dass es zum Verschleiß der Nasen 255 und zu unzulässigen, axialen Verschiebungen des Lagerkäfigs 250 gegenüber dem Lageraußenring 240 kommen kann. Durch ein axiales Auswandern des Nadelkranzes 250, 260 relativ zum Lageraußenring 240 kann der Wälzkontakt eingeschränkt oder gar verloren gehen, was zu Verschleiß, Materialermüdung und somit zum vorzeitigen Lagerausfall führen kann.

Aus der DE 10 2007 013 039 A1 und der US 2010 129 023 A1 sind Nadellager mit einem Außenring und einem Lagerkäfig bekannt, wobei zur Lagesicherung des Außenrings gegenüber dem Lagerkäfig an einem axialen Ende des Lagerkäfigs sich in tangentialer Richtung erstreckende Federzungen einstückig angeformt sind.

Die nicht vorveröffentlichte WO 2013 087 062 A1 zeigt einen Lagerkäfig für ein Wälzlager zur Lagerung einer Nockenwelle. An einem Ende des Lagerkäfigs ist ein ringförmiger Anschlag vorgesehen. Am anderen Ende des Lagerkäfigs sind elastische Stege mit Rastnasen angeordnet. Die Stege erstrecken sich in axialer Richtung und sind in Ausnehmungen zwischen zusätzlichen Stegen angeordnet.

Die Aufgabe der vorliegenden Erfindung liegt in der Schaffung eines verbesserten Konzepts für einen Lagerkäfig eines Wälzlagers.

Die Aufgabe wird gelöst durch eine Käfigkomponente gemäß dem anhängigen unabhängigen Anspruch 1 und ein Nadellager mit der Lagerkomponente gemäß Anspruch 9.

Es ist ein Kerngedanke von Ausführungsbeispielen, die Nasen eines Lagerkäfigs größer auszuführen, um im Betrieb des Lagers eine axiale Fixierung des Lagerkäfigs und damit der darin befindlichen Wälzkörper gegenüber einem Lagerring zu erreichen. Durch die axiale Fixierung der Wälzkörper gegenüber dem Lagerring können axiale Verschiebung im Betrieb, d.h. ein Auswandern und ein Verlust des Wälzkontaktes, und damit der Verschleiß des Lagers insgesamt, verringert werden. Es ist ein weiterer Kerngedanke von Ausführungsbeispielen die Nasen eines Lagerkäfigs an flexiblen Stegen anzubringen, die bei der Montage eines Lagers nachgeben und so einen Verschleiß des Lagerkäfigs bei der Montage verringern, insbesondere Brüchen des Lagerkäfigs vorbeugen. Ausführungsbeispiele basieren ferner auf der Erkenntnis, dass die flexiblen Stege in einem Bereich des Lagerkäfigs vorgesehen werden können, der außerhalb des Führungsbereiches für die Wälzkörper liegt. Die axiale Erstreckung des Lagerkäfigs ist somit größer als die des Lagerrings, in dem die Wälzkörper durch den Lagerkäfig geführt werden.

Ausführungsbeispiele können somit einen verbesserten Lagerkäfig schaffen, der Rastnasen oder Einschnappnasen für einen Lagerring aufweist, zwischen denen der Lagerring derart einrasten kann, dass dieser sowohl beim Transport als auch im Betrieb besser gegen axiale Krafteinwirkungen und Verschiebungen gesichert ist. Der Rastmechanismus ist dabei außerhalb eines die Wälzkörper führenden Bereichs angeordnet, sodass die Führungseigenschaften des Lagerkäfigs nicht beeinträchtigt werden. Aufgrund der außerhalb des Führungsbereichs angeordneten elastischen Struktur können die Rastnasen in entsprechender Länge oder Höhe ausgeführt werden, da diese relativ weit nachgeben können, so dass auch Beschädigungsrisiken bei der Montage verringert werden können und gleichzeitig eine axiale Fixierung des Lagerrings im Betrieb möglich ist.

Ausführungsbeispiele stellen daher eine Käfigkomponente für ein Wälzlager bereit, die einen ersten Abschnitt zur Führung von Wälzkörpern gegenüber einem Lagerring umfasst. Der erste Abschnitt kann insofern auch zur Fixierung des Lagerrings dienen. Die Käfigkomponente umfasst einen zweiten Abschnitt, der sich an den ersten Abschnitt in axialer Richtung anschließt, wobei an dem zweiten Abschnitt elastische Stege mit Rastnasen vorgesehen sind, die den ersten Abschnitt begrenzen. Der zweite Abschnitt überragt im Montierten Zustand den Lagerring in axialer Richtung und kann mit dem ersten Abschnitt einstückig gebildet sein. Beispielsweise kann die Käfigkomponente einen Kunststoff oder einen metallischem Werkstoff aufweisen. Erfindungsgemäß erstrecken sich die Stege im Wesentlichen in tangentialer Richtung, d.h. in Umfangsrichtung, beispielsweise entlang des Umfangs des Lagerkäfigs, d.h. die Ausdehnung der Stege in tangentialer Richtung ist dann größer als ihre Ausdehnung in axialer oder radialer Richtung. Die Stege können durch Ausnehmungen voneinander getrennt sein, d.h. es können sich Freiräume zwischen den Stegen befinden. Die Stege können in Ausführungsbeispielen auch einseitig, z.B. an einem axialen Ende des zweiten Abschnitts, an der Käfigkomponente angebracht sein. In anderen Worten können die Stege die elastische oder federnde Wirkung dadurch erzielen, dass sie sich durchbiegen. Dies kann in einigen Ausführungsbeispielen durch beidseitige Befestigung der Stege erzielt werden, in anderen Ausführungsbeispielen wird diese Wirkung auch durch eine einseitige Befestigung erreicht. In einigen Ausführungsbeispielen ist der zweite Abschnitt durch zwei Ringe begrenzt, die durch zumindest mehrere Stege miteinander verbunden sind.

Die Rastnasen sind dabei auf den Stegen angebracht und im Wesentlichen in radialer Richtung von der Rotationsachse der Lagerkäfigkomponente nach außen gerichtet. Die Gestalt der Rastnasen selbst kann dann rampenförmig oder keilförmig sein. Ein dem ersten Abschnitt zugewandtes Ende einer Rastnase kann dann in radialer Richtung weiter erstreckt sein, als ein dem ersten Abschnitt abgewandtes Ende. In anderen Worten können die Rastnasen nach außen hin spitz verlaufen und nach innen hin, d.h. zum ersten Abschnitt hin, stumpf ausgestaltet sein, damit ein Lagerring dahinter einrasten kann. Die nach außen gerichtete spitz zulaufende Form kann dann die Montage erleichtern, da die Rastnasen dann durch Aufschieben des Lagerrings auf den Lagerkäfig nach innen gedrückt werden, um nach dem Aufschieben in ihre ursprüngliche Position zurückzukehren und den Lagerring zu fixieren.

Die Rastnasen können so während Montage des Lagerrings über die elastischen Stege in radialer Richtung von der Rotationsachse der Lagerkäfigkomponente nach innen nachgeben, ohne dass sich der erste Abschnitt der Lagerkäfigkomponente dabei nennenswert verformt, bzw. Gefahr läuft, beschädigt zu werden. Der Lagerring kann somit über die Ringe geschoben werden, ohne die Käfigkomponente zu beschädigen. Nachdem der Lagerring über die Rastnasen geschoben wurde, kehren diese aufgrund der elastischen Stege in ihre ursprüngliche Position zurück und hindern den Lagerring fortan an axialen Bewegungen. In anderen Worten rastet der Lagerring hinter den Rastnasen ein.

In Ausführungsbeispielen kann die Käfigkomponente als Käfigsegment oder als ganzer Käfig ausgebildet sein. Unter Käfigsegmenten seien hier Segmente eines Käfigs verstanden, aus denen ein Käfig gebildet werden kann. Die Segmente können dabei untereinander unterschiedlich oder auch gleich sein. Ein Käfigsegment kann beispielsweise einem winkelmäßigen Abschnitt eines Käfigs entsprechen, so dass aus einer entsprechenden Anzahl von Käfigsegmenten ein ganzer Käfig gebildet werden kann. In Ausführungsbeispielen kann der Käfig auch in axiale Käfigsegmente unterteilt sein.

In manchen Ausführungsbeispielen beträgt die axiale Ausdehnung des zweiten Abschnitts wenigstens 5%, 10%, oder 20% der axialen Ausdehnung des ersten Abschnitts. Generell kann die Breite des zweiten Abschnitts von vielen Faktoren, wie der Wahl des Materials, der Dimension der Käfigkomponente, der Verformungseigenschaften der Rastnasen und der Stege, den Anwendungsbedingungen (Temperatur, umgebendes Medium), usw. abhängen. In anderen Worten kann der zweite Abschnitt der Käfigkomponente, der die Rastnasen und die Stege umfasst, im montierten Zustand um mehr als 5%, 10%, oder 20% der axialen Ausdehnung des Lagerings über diesen hervorstehen. Die Ausdehnung des zweiten Abschnitts kann mehr als 5%, 10%, oder 20% der gesamten axialen Ausdehnung der Käfigkomponente ausmachen. In Ausführungsbeispielen können sich die Rastnasen im Wesentlichen in radialer Richtung erstrecken, um die Käfigkomponente im Betrieb gegenüber dem Lagerring in axialer Richtung zu fixieren. Darüber hinaus können sich an dem zweiten Abschnitt zusätzliche Stege ohne Rastnasen befinden. Beispielsweise kann nur jeder zweite oder nur jeder dritte Steg eine Rastnase aufweisen.

In weiteren Ausführungsbeispielen kann die Käfigkomponente ferner einen dritten Abschnitt aufweisen, der sich an den ersten Abschnitt in axialer Richtung anschließt und dem zweiten Abschnitt gegenüberliegend angeordnet ist, wobei an dem dritten Abschnitt ein Anschlag oder ebenfalls elastische Stege mit Rastnasen vorgesehen sind, die den ersten Abschnitt begrenzen. In anderen Worten weist in manchen Ausführungsbeispielen die Käfigkomponente an beiden axialen Enden Abschnitte mit Rastnasen auf, so dass ein Lagerring von beiden Seiten her montiert bzw. aufgeschoben werden kann. In anderen Ausführungsbeispielen weist die Käfigkomponente nur im zweiten Abschnitt Rastnasen auf und in dem dritten Abschnitt einen Anschlag, so dass der Lagerring nur von der axialen Seite mit den Rastnasen her montiert werden kann und der Lagerring zwischen dem Anschlag und einer Rastnase fixierbar ist.

Der zweite und der dritte Abschnitt können spiegelsymmetrisch zum ersten Abschnitt angeordnet sein und sie können spiegelsymmetrisch ausgestaltet sein. Der zweite und der dritte Abschnitte können dann zusammen mehr als 5%, 10%, 20% oder 40%der gesamten axialen Ausdehnung der Käfigkomponente ausmachen. In manchen Ausführungsbeispielen beträgt die axiale Ausdehnung des dritten Abschnitts wenigstens 2%, 5%, 10%, oder 20% der axialen Ausdehnung des ersten Abschnitts. In anderen Worten steht auch der dritte Abschnitt der Käfigkomponente, im montierten Zustand um mehr als 2%, 5%, 10%, oder 20% der axialen Ausdehnung des Lagerings über diesen hervor. Die Rastnasen können dann auf den beiden Abschnitten, d.h. auf dem zweiten und dem dritten Abschnitt, jeweils axial gegenüberliegend angeordnet sein, so dass zwischen zwei gegenüberliegenden Rastnasen der Lagerring fixierbar ist.

In Ausführungsbeispielen kann der erste Abschnitt zur Führung von Nadeln als Wälzkörper eines Nadellagers ausgebildet sein. Ausführungsbeispiele schaffen auch ein Nadellager mit einer Käfigkomponente der obigen Beschreibung, einem Lageraußenring, der an den Rastnasen der Käfigkomponente eingerastet ist und einer Mehrzahl von Wälzkörpern, die in dem ersten Abschnitt der Käfigkomponente geführt werden. Der Lageraußenring kann darüber hinaus eine Befestigungsmöglichkeit zur Befestigung an einem Gehäuse aufweisen.

Ein Ausführungsbeispiel der vorliegenden Erfindung wird im Folgenden anhand der beiliegenden Figuren im Detail erläutert. Es zeigen
Figur 1a ein nicht erfindungsgemäßes Ausführungsbeispiel einer Käfigkomponente mit Wälzkörpern;
Figur 1b Die Käfigkomponente der Figur 1a mit Lageraußenring;
Figur 1c ein Nadellager mit der Käfigkomponente der Figur 1a;
Figur 2a ein erfindungsgemäßes Ausführungsbeispiel einer Käfigkomponente mit Wälzkörpern;
Figur 2b Die Käfigkomponente der Figur 2a mit Lageraußenring;
Figur 2c ein Nadellager mit der Käfigkomponente der Figur 2a; und
Figur 3 ein konventionelles Nadellager.

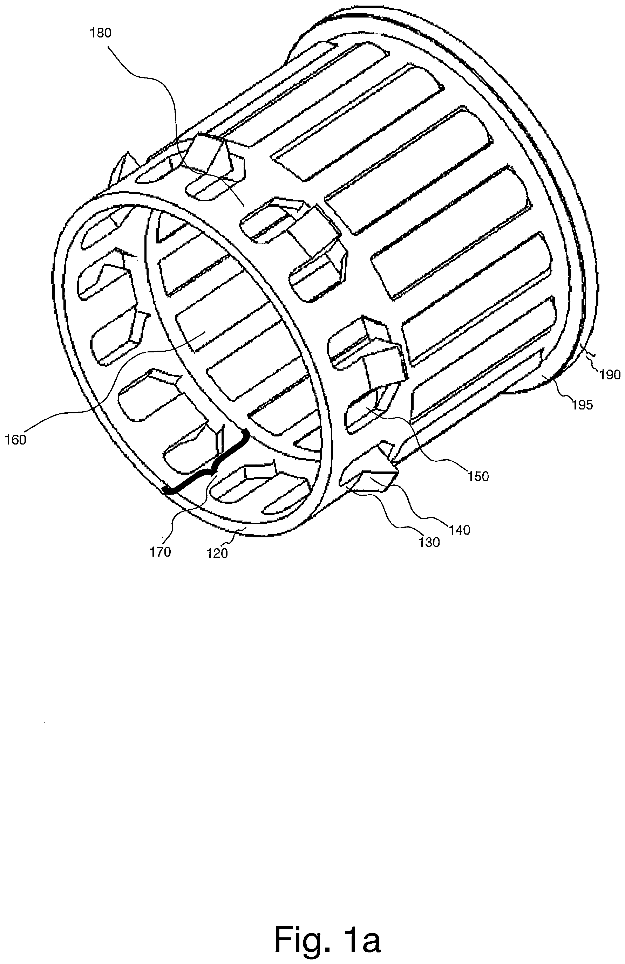

Die Figur 1a zeigt ein nicht erfindungsgemäßes Ausführungsbeispiel einer Käfigkomponente 120 für ein Wälzlager mit Wälzkörpern 160, wobei die Figur 1a einen ganzen Käfig 120 als Käfigkomponente 120 illustriert. Die Käfigkomponente 120 für das Wälzlager 100 umfasst einen ersten Abschnitt zur Führung von Wälzkörpern 160 gegenüber einem Lagerring 110, wobei in dem Ausführungsbeispiel der Figur 1a eine Mehrzahl von Wälzkörpern 160 vorgesehen ist, die in dem ersten Abschnitt der Käfigkomponente 120 geführt werden und wobei die Anordnung des Lagerrings zwischen Rastnasen 140 und einem Anschlag 195 vorgesehen ist. Die Käfigkomponente 120 umfasst ferner einen zweiten Abschnitt 170, der sich an den ersten Abschnitt in axialer Richtung anschließt, wobei an dem zweiten Abschnitt elastische Stege 130 mit den Rastnasen 140 vorgesehen sind, die den ersten Abschnitt begrenzen. Die in Figur 1a gezeigten Stege 130 erstrecken sich dabei im Wesentlichen in axialer Richtung der Rotationsachse der Käfigkomponente 120, oder des Wälz- oder Nadellagers, und sind durch Ausnehmungen 150 voneinander getrennt.

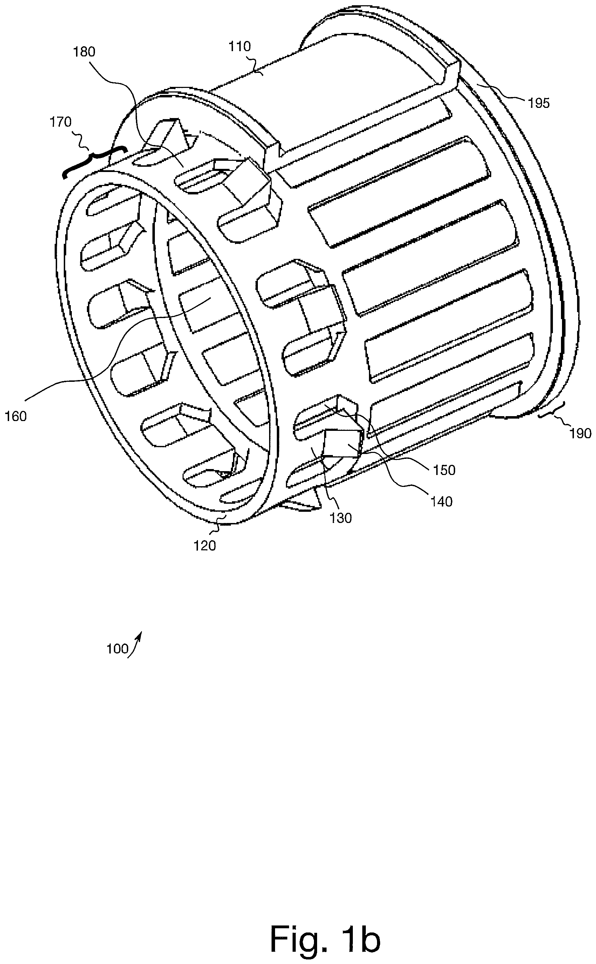

Figur 1b zeigt das nicht erfindungsgemäße Ausführungsbeispiel der Käfigkomponente 120 mit einem Teil eines Lageraußenrings 110. In der Figur 1b ist zu erkennen, dass der zweite Abschnitt 170 den Lagerring 110 in axialer Richtung überragt. In anderen Worten ist die Käfigkomponente 120 insgesamt in axialer Richtung weiter ausgedehnt als der Lagerring 110. Die Käfigkomponente 120 umfasst darüber hinaus einen dritten Abschnitt 190, der sich an den ersten Abschnitt in axialer Richtung anschließt und dem zweiten Abschnitt 170 gegenüberliegend (so dass der zweite Abschnitt 170 und der dritte Abschnitt 190 den ersten Abschnitt axial umschließen) angeordnet ist, wobei an dem dritten Abschnitt 190 ein Anschlag 195 oder auch elastische Stege mit Rastnasen vorgesehen sein können, die den ersten Abschnitt begrenzen. In den Figuren 1a und 1b ist jeweils ein Ausführungsbeispiel der Käfigkomponente 120 dargestellt, bei dem der dritte Abschnitt 190 einen Anschlag 195, der als ringförmiger Steg ausgebildet ist, aufweist. Der Anschlag 195 überragt den ersten Abschnitt der Käfigkomponente 120 in radialer Richtung derart, dass sich der Lagerring 110 auf dem Anschlag 195 abstützt, und so zwischen den Rastnasen 140 und dem Anschlag 195 einrastet. Die Ausdehnung des Anschlags 195 in radialer Richtung kann im Wesentlichen der der Rastnasen entsprechen, d.h. auch der Anschlag 195 ist in radialer Richtung weit genug ausgedehnt, um die Käfigkomponente gegenüber dem Lagerring 110 axial zu fixieren.

In anderen Ausführungsbeispielen einer Käfigkomponente 120, kann diese an ihren beiden axialen Enden jeweils einen Abschnitt 170, 190 mit elastischen Stegen 130 und Rastnasen 140 umfassen. Die axiale Ausdehnung des zweiten Abschnitts 170 kann dann wenigstens 5%, 10% oder 20% der axialen Ausdehnung des ersten Abschnitts oder der axialen Ausdehnung des Lagerrings 110 betragen. In einem solchen Ausführungsbeispiel können der zweite Abschnitt 170 und der dritte Abschnitt 190 im Wesentlichen gleiche axiale Ausdehnungen haben.

Die Rastnasen 140 erstrecken sich im Wesentlichen in radialer Richtung und hindern so, ggf. im Zusammenspiel mit dem Anschlag 195 oder weiterer Rastnasen den Lagerring 110 an einer axialen Verschiebung gegenüber dem Käfig bzw. der Käfigkomponente 120 und umgekehrt. Die Käfigkomponente 120 wird so im Betrieb gegenüber dem Lagerring 110 in axialer Richtung fixiert. Wie darüber hinaus aus den Figuren 1a und 1b zu erkennen ist, umfasst der Käfig 120 an dem zweiten Abschnitt 170 zusätzliche Stege 180 ohne Rastnasen, die beispielsweise der Stabilisierung des Abschnitte, insbesondere des zweiten Abschnitts durch den Steg 180, dienen können. Der zweite Abschnitt 170 ist im vorliegenden Ausführungsbeispiel je durch zwei Ringe gebildet die durch Stege 180 miteinander verbunden sind und durch die Stege 180 beabstandet werden. Die Stege 130 mit den Rastnasen 140 sind dabei in Ausnehmungen 150 zwischen den Stegen 180 angebracht und mit dem axial außen gelegenen Ring gekoppelt. In dem gezeigten Ausführungsbeispiel sind die Stege 130 mit den Rastnasen 140 nicht an den axial innen gelegenen Ring gekoppelt, da an dieser Stelle das größte radiale Nachgeben bei der Montage des Lagerrings 110 erforderlich ist.

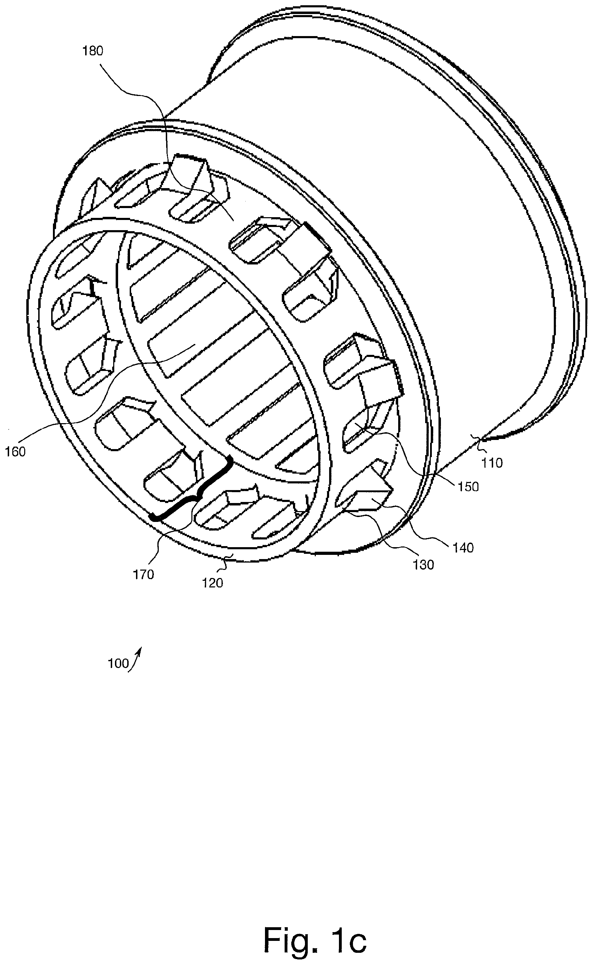

Figur 1c zeigt das Ausführungsbeispiel aus den Figuren 1a und 1b noch einmal im gesamten Nadellager 100. Der dritte Abschnitt 190 wird in der Figur 1c von dem Lagerring 110 verdeckt. Dennoch ist zu erkennen, dass der Lagerring 110 von den Rastnasen 140 und dem Anschlag 195 (vgl. Figur 1b) axial fixiert bzw. gehalten wird.

Die Rastnasen 140 in dem zweiten Abschnitt 170 sind jeweils axial gegenüberliegend zum Anschlag 195 angeordnet, so dass zwischen den Rastnasen 140 und dem Anschlag 195 der Lagerring 110 fixiert wird. Der erste Abschnitt dient in dem vorliegenden Ausführungsbeispiel zur Führung von Nadeln 160 als Wälzkörper 160 des Nadellagers 100.

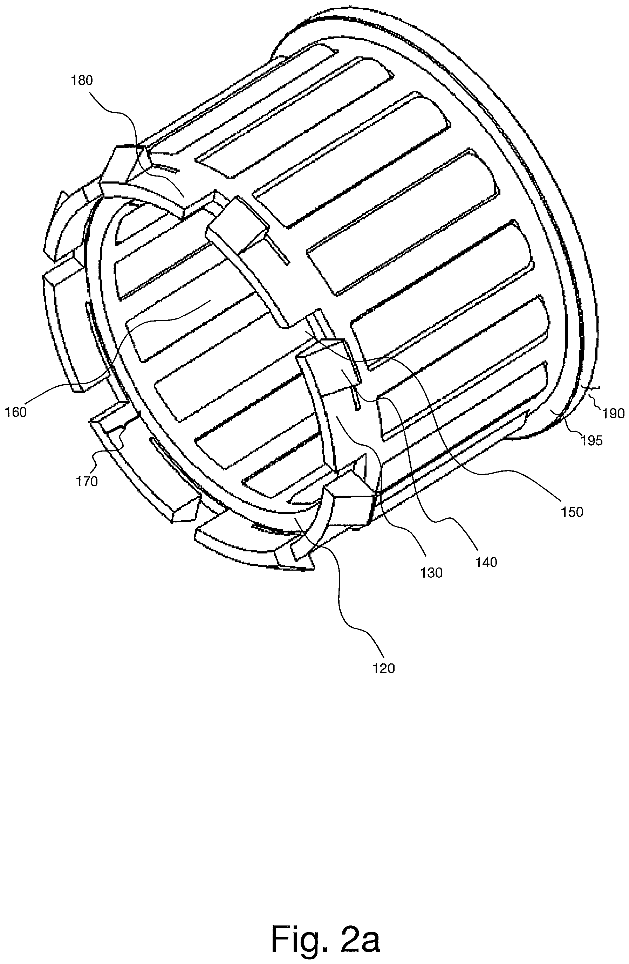

Die Figuren 2a bis 2c zeigen ein erfindungsgemäßes Ausführungsbeispiel einer Käfigkomponente 120 für ein Wälzlager mit Wälzkörpern 160. Die Käfigkomponente 120 umfasst die gleichen Komponenten, wie sie bereits anhand der Figuren 1a bis 1c beschrieben wurden, gleiche Komponenten tragen gleiche Bezugszeichen. Das Ausführungsbeispiel, das in den Figuren 2a bis 2c dargestellt ist, unterscheidet sich von dem Ausführungsbeispiel der Figuren 1a bis 1c durch die Orientierung der Stege 130 mit den Rastnasen 140. Wie in der Figur 2a zu erkennen ist, erstreckt sich der Steg 130 mit der Rastnase 140 im Wesentlichen in Umfangsrichtung, d.h. in tangentialer Richtung und nicht im Wesentlichen in axialer Richtung, wie das in den Figuren 1a bis 1c gezeigte Ausführungsbeispiel. In anderen Worten ist in der Figur 2a zu erkennen, dass sich zunächst ein Steg 180 in im Wesentlichen axialer Richtung erstreckt und dann in einen Steg 130, an dem sich die Rastnase 140 befindet, und der sich im Wesentlichen in tangentialer Richtung erstreckt, übergeht.

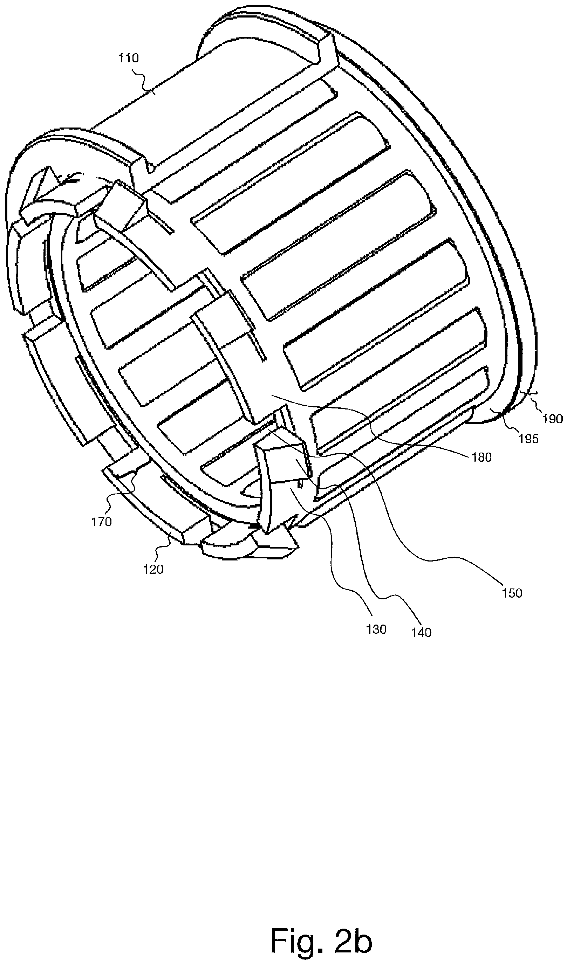

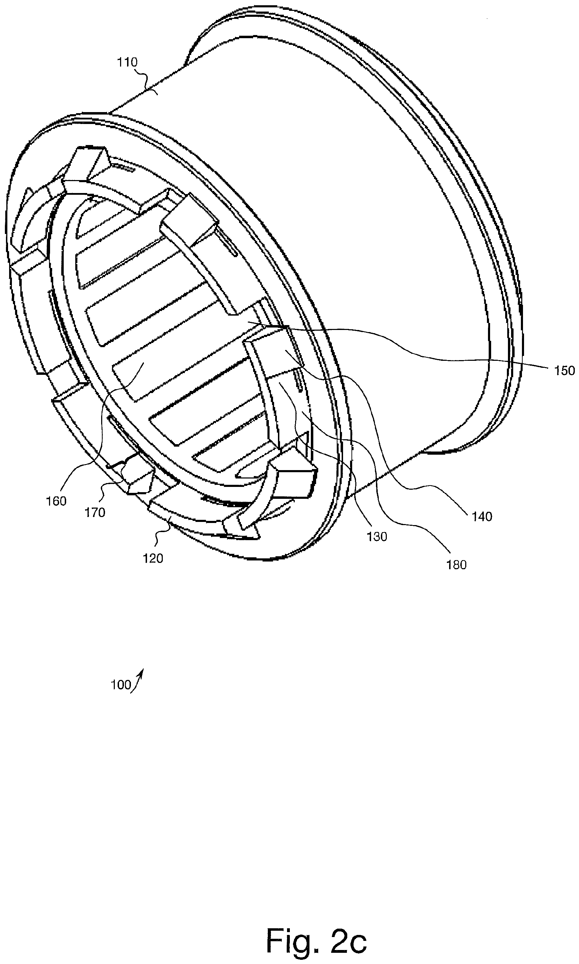

Figur 2b stellt das erfindungsgemäße Ausführungsbeispiel der Figur 2a mit einem Lageraußenring 110 dar. Die Figur 2c zeigt das entsprechende Ausführungsbeispiel eines Nadellagers 100. Gleiche Bezugszeichen bezeichnen gleich Komponenten, auf eine wiederholte Beschreibung wird verzichtet. In gleicher Weise wie bei dem oben beschriebenen Ausführungsbeispiel lässt sich auch in den Figuren 2b und 2c erkennen, wie der Lagerring 110 zwischen den Rastnasen 140 und dem Anschlag 195 einrastet. Auch in diesem Ausführungsbeispiel ist zu erkennen, wie der zweite Abschnitt 170 den ersten Abschnitt, d.h. den Bereich der Wälzkörper überragt. Auch in weiteren Ausführungsbeispielen mit tangentialen Stegen 130 wäre es denkbar, anstatt des Anschlags 195 eine weitere Struktur mit auf Stegen angebrachten Rastnasen zu verwenden, wobei auch hier verschiedene Orientierungen der Stege denkbar sind.

### Bezugszeichenliste

- 100: Nadellager
- 110: Lagerring
- 120: Käfigkomponente
- 130: Elastischer Steg
- 140: Rastnase
- 150: Ausnehmung
- 160: Wälzkörper
- 170: Zweiter Abschnitt
- 180: Steg ohne Rastnase
- 190: Dritter Abschnitt
- 195: Anschlag
- 235: Nadellager
- 240: Lageraußenring
- 250: Lagerkäfig
- 255: Nase
- 260: Nadeln

## Patentansprüche

1. Eine Käfigkomponente (120) für ein Wälzlager (100) mit einem ersten Abschnitt zur Führung von Wälzkörpern (160) gegenüber einem Lagerring (110) und einem zweiten Abschnitt (170), der sich an den ersten Abschnitt in axialer Richtung anschließt, wobei an dem zweiten Abschnitt elastische Stege (130) mit Rastnasen (140) vorgesehen sind, die den ersten Abschnitt begrenzen, wobei sich die Stege (130) im Wesentlichen in tangentialer Richtung erstrecken.

2. Die Käfigkomponente (120) gemäß Anspruch 1, wobei ein dem ersten Abschnitt zugewandtes Ende einer Rastnase (140) sich in radialer Richtung weiter erstreckt als ein dem ersten Abschnitt abgewandtes Ende.

3. Die Käfigkomponente (120) gemäß einem der vorangehenden Ansprüche, die als Käfigsegment (120) oder als ganzer Käfig (120) ausgebildet ist und wobei die axiale Ausdehnung des zweiten Abschnitts (170) wenigstens 10% der axialen Ausdehnung des ersten Abschnitts beträgt.

4. Die Käfigkomponente (120) gemäß einem der vorangehenden Ansprüche, bei der sich die Rastnasen (140) im Wesentlichen in radialer Richtung erstrecken und ausgebildet sind, um die Käfigkomponente (120) im Betrieb gegenüber dem Lagerring (110) in axialer Richtung zu fixieren.

5. Die Käfigkomponente (120) gemäß einem der vorangehenden Ansprüche, bei der sich an dem zweiten Abschnitt (170) zusätzliche Stege (180) ohne Rastnasen befinden.

6. Die Käfigkomponente (120) gemäß einem der vorangehenden Ansprüche, die einen dritten Abschnitt (190) aufweist, der sich an den ersten Abschnitt in axialer Richtung anschließt und dem zweiten Abschnitt (170) gegenüberliegend angeordnet ist, wobei an dem dritten Abschnitt (190) ein Anschlag (195) oder elastische Stege mit Rastnasen vorgesehen sind, die den ersten Abschnitt begrenzen.

7. Die Käfigkomponente (120) gemäß Anspruch 6, bei der die Rastnasen (140) auf den beiden Abschnitten (170) jeweils axial gegenüberliegend angeordnet sind, so dass zwischen zwei Rastnasen (140) der Lagerring (110) fixierbar ist oder der Lagerring (110) zwischen dem Anschlag (195) und einer Rastnase (140) fixierbar ist.

8. Die Käfigkomponente (120) gemäß einem der vorangehenden Ansprüche, bei der der erste Abschnitt zur Führung von Nadeln (160) als Wälzkörper (160) eines Nadellagers (100) ausgebildet ist.

9. Ein Nadellager (100) mit einer Käfigkomponente (120) gemäß einem der vorangehenden Ansprüche, einem Lageraußenring (110), der an den Rastnasen (140) der Käfigkomponente (120) eingerastet ist und einer Mehrzahl von Wälzkörpern (160), die in dem ersten Abschnitt der Käfigkomponente (120) geführt werden.

10. Das Nadellager (100) gemäß Anspruch 9, bei dem der Lageraußenring (110) eine Befestigungsmöglichkeit zur Befestigung an einem Gehäuse aufweist.

## Claims

1. Cage component (120) for an anti-friction bearing (100) having a first section for guiding rolling bodies (160) with respect to a bearing ring (110), and a second section (170) which adjoins the first section in the axial direction, elastic webs (130) with latching lugs (140) being provided on the second section, which webs (130) delimit the first section, the webs (130) extending substantially in the tangential direction.

2. Cage component (120) according to Claim 1, one end of a latching lug (140), which end faces the first section, extending further in the radial direction than an end which faces away from the first section.

3. Cage component (120) according to either of the preceding claims which is configured as a cage segment (120) or as a complete cage (120), and the axial extent of the second section (170) being at least 10% of the axial extent of the first section.

4. Cage component (120) according to one of the preceding claims, in the case of which the latching lugs (140) extend substantially in the radial direction and are configured to fix the cage component (120) in the axial direction with respect to the bearing ring (110) during operation.

5. Cage component (120) according to one of the preceding claims, in the case of which additional webs (180) without latching lugs are situated on the second section (170) .

6. Cage component (120) according to one of the preceding claims which has a third section (190) which adjoins the first section in the axial direction and is arranged so as to lie opposite the second section (170), a stop (195) or elastic webs with latching lugs which delimit the first section being provided on the third section (190) .

7. Cage component (120) according to Claim 6, in the case of which the latching lugs (140) on the two sections (170) are arranged so as to lie axially opposite one another in each case, with the result that the bearing ring (110) can be fixed between two latching lugs (140), or the bearing ring (110) can be fixed between the stop (195) and one latching lug (140).

8. Cage component (120) according to one of the preceding claims, in the case of which the first section is configured for the guidance of needles (160) as rolling bodies (160) of a needle bearing (100).

9. Needle bearing (100) having a cage component (120) according to one of the preceding claims, a bearing outer ring (110) which is latched on the latching lugs (140) of the cage component (120), and a plurality of rolling bodies (160) which are guided in the first section of the cage component (120).

10. Needle bearing (100) according to Claim 9, in the case of which the bearing outer ring (110) has a fastening possibility for fastening to a housing.

## Revendications

1. Composant de cage (120) pour un palier à roulement (100) comprenant une première partie servant au guidage de corps de roulement (160) par rapport à une bague de palier (110) et une deuxième partie (170) qui se raccorde à la première partie dans la direction axiale, dans lequel des éléments jointifs élastiques (130) dotés d'ergots d'encliquetage (140) sont prévus sur la deuxième partie, lesquels délimitent la première partie, dans lequel les éléments jointifs (130) s'étendent sensiblement dans la direction tangentielle.

2. Composant de cage (120) selon la revendication 1, dans lequel une extrémité d'un ergot d'encliquetage (140) tournée vers la première partie s'étend plus loin dans la direction radiale qu'une extrémité opposée à la première partie.

3. Composant de cage (120) selon l'une des revendications précédentes, lequel est réalisé sous forme de segment de cage (120) ou de cage complète (120), et dans lequel l'étendue axiale de la deuxième partie (170) est égale à au moins 10 % de l'étendue axiale de la première partie.

4. Composant de cage (120) selon l'une des revendications précédentes, dans lequel les ergots d'encliquetage (140) s'étendent sensiblement dans la direction radiale et sont réalisés pour fixer le composant de cage (120) dans la direction axiale par rapport à la bague de palier (110) lors du fonctionnement.

5. Composant de cage (120) selon l'une des revendications précédentes, dans lequel des éléments jointifs (180) supplémentaires dépourvus d'ergots d'encliquetage se trouvent sur la deuxième partie (170).

6. Composant de cage (120) selon l'une des revendications précédentes, lequel comprend une troisième partie (190) qui se raccorde à la première partie dans la direction axiale et est disposée de manière opposée à la deuxième partie (170), dans lequel une butée (195) ou des éléments jointifs élastiques dotés d'ergots d'encliquetage sont prévus sur la troisième partie (190), lesquels délimitent la première partie.

7. Composant de cage (120) selon la revendication 6, dans lequel les ergots d'encliquetage (140) sur les deux parties (170) sont disposés respectivement de manière opposée axialement, de telle sorte que la bague de palier (110) puisse être fixée entre deux ergots d'encliquetage (140) ou que la bague de palier (110) puisse être fixée entre la butée (195) et un ergot d'encliquetage (140).

8. Composant de cage (120) selon l'une des revendications précédentes, dans lequel la première partie est réalisée pour le guidage d'aiguilles (160) en tant que corps de roulement (160) d'un palier à aiguilles (100) .

9. Palier à aiguilles (100) comprenant un composant de cage (120) selon l'une des revendications précédentes, une bague extérieure de palier (110) qui est encliquetée sur les ergots d'encliquetage (140) du composant de cage (120) et une pluralité de corps de roulement (160) qui sont guidés dans la première partie du composant de cage (120) .

10. Palier à aiguilles (100) selon la revendication 9, dans lequel la bague extérieure de palier (110) présente une possibilité de fixation pour la fixation à un carter.
